# EUROPEAN PATENT SPECIFICATION

(11) **EP 2 597 271 B1**
(45) Date of publication and mention of the grant of the patent: **21.04.2021**
(21) Application number: 11806544.0
(22) Date of filing: 13.05.2011
(51) Int. Cl.: F01D 25/12, F01D 25/24, F01K 23/10, F02C 6/18, F02C 7/18, F01K 13/00, F22B 1/18

(54) **COMBINED CYCLE POWER GENERATOR**
KOMBIKRAFTWERKGENERATOR
GÉNÉRATEUR D'ÉNERGIE À CYCLE COMBINÉ

(30) Priority: 14.07.2010 JP 2010159304
(43) Date of publication of application: 29.05.2013
(73) Proprietor: Mitsubishi Power, Ltd., Yokohama 220-8401 (JP)
(72) Inventor: MARUYAMA, Takashi, Tokyo 108-8215 (JP)
(74) Representative: Cabinet Beau de Loménie
(86) International application number: PCT/JP2011/061111
(87) International publication number: WO 2012/008213

(56) References cited:
- EP-A1- 0 939 201
- EP-A1- 0 939 202
- EP-A2- 0 736 669
- EP-A2- 0 940 563
- EP-A2- 1 849 959
- JP-A- 10 159 584
- JP-A- 10 331 610
- JP-A- 59 058 101
- JP-A- 62 153 506
- JP-A- H09 189 236
- JP-A- 2008 151 013
- US-A- 6 038 851

## Description

### BACKGROUND OF THE INVENTION

### Field of the Invention

The present invention relates to a combined cycle power generating device in which the steam discharged from a high-pressure chamber of a steam turbine is reheated by the exhaust heat of the exhaust gas emitted from a gas turbine so that the reheated steam is supplied to an intermediate-pressure chamber of the steam turbine and used to promote the drive of the steam turbine; the present invention especially relates to a combined cycle power generating device in which the turbine rotor in the intermediate-pressure chamber can be effectively cooled.

### Background of the Invention

The combined cycle power generating device in which at least one gas turbine and at least one steam turbine are combined is previously known. Since the combined cycle power generating device in which the gas turbine and the steam turbine are combined efficiently generates electric power in a manner that the exhaust heat of the gas turbine promotes the power generation of the steam turbine, the fuel consumption and the CO₂ generation are kept low; accordingly, the demand for the combined power generating device is expanding in recent years.

In the combined cycle power generating device, the exhaust heat of the gas turbine reheats the steam discharged from the high-pressure chamber of the steam turbine and the reheated steam (the reheat steam) is supplied to the intermediate- pressure chamber so that the reheat steam promotes the power generation of the steam turbine.

Further, in the combined cycle power generating device in which the gas turbine and the steam turbine are combined, the temperature of the main steam supplied to the high-pressure turbine of the steam turbine system is almost the same as the temperature of the reheat steam supplied to the intermediate-pressure turbine of the steam turbine system; however, the diameter of the blade in the intermediate-pressure turbine is greater than the diameter of the blade in the high-pressure turbine so that the centrifugal force acting on the blade in the intermediate-pressure turbine is stronger than the centrifugal force acting on the blade in the high-pressure turbine, when the steam turbine is operated and the rotor is rotated. Thus, with regard to the creep strength of the turbine rotor and the blade root especially in the periphery of the steam inlet part, a difficulty to be settled arises. Hence, it becomes necessary to cool the turbine rotor in the intermediate-pressure turbine of the combined cycle power generating device.

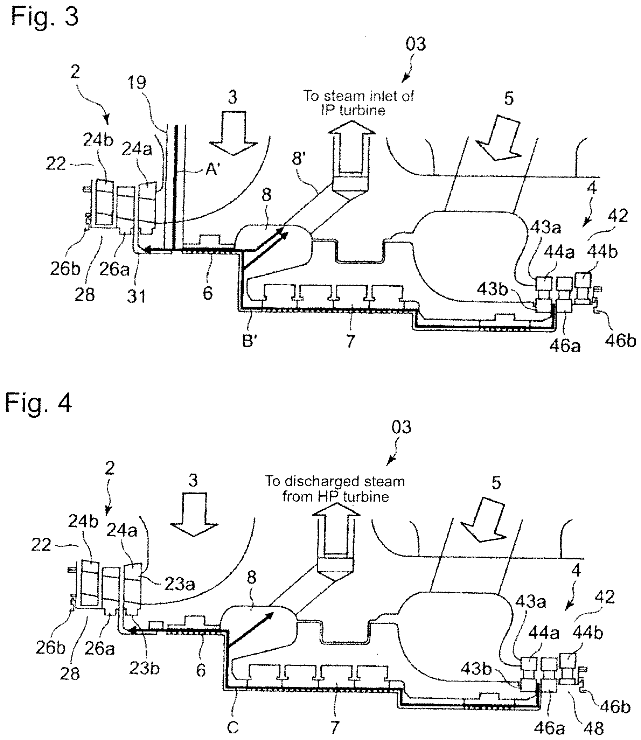

Fig. 4 illustrates the cooling method regarding the turbine rotor in the intermediate-pressure turbine of the conventional combined cycle power generating device; thereby, Fig. 4 shows the periphery of the steam inlet of the high-pressure turbine as well as the periphery of the steam inlet of the intermediate-pressure turbine regarding the steam turbine in the combined cycle power generating device.

The steam turbine system 03 is provided with the intermediate-pressure turbine 2 and the high-pressure turbine 4. The intermediate-pressure turbine 2 is provided with a plurality of stator cascades. A plurality of stator blades 24a forms the first stage stator cascade; a plurality of stator blades 24b forms the second stage stator cascade; a plurality of stator blades 24c forms the third stage stator cascade, ····, and so on. Hereby, the intermediate-pressure turbine 2 is further provided with an intermediate- pressure turbine casing 22 that supports the roots 23a and tips 23b of the stator blades 24a regarding the first stage stator cascade; in addition, the intermediate-pressure turbine casing 22 supports the roots 23a of the stator blades 24b, 24c, ···· regarding the second stage stator cascade and the following stage stator cascades. The intermediate-pressure turbine 2 is further provided with a plurality of rotor cascades. A plurality of rotor blades 26a forms the first stage rotor cascade; a plurality of rotor blades 26b forms the second stage rotor cascade; a plurality of rotor blades 26c forms the third stage rotor cascade, ····, and so on.

On the other hand, the high-pressure turbine 4 is provided with a plurality of stator cascades . A plurality of stator blades 44a forms the first stage stator cascade; a plurality of stator blades 44b forms the second stage stator cascade; a plurality of stator blades 44c forms the third stage stator cascade, ····, and so on. Hereby, the high-pressure turbine 4 is further provided with a high-pressure turbine casing 42 that supports the roots 43a and tips 43b of the stator blades 44a regarding the first stage stator cascade; in addition, the high-pressure turbine casing 42 supports the roots 43a of the stator blades 44b, 44c, ···· regarding the second stage stator cascade and the following stage stator cascades. The high-pressure turbine 4 is further provided with a plurality of rotor cascades. A plurality of rotor blades 46a forms the first stage rotor cascade; a plurality of rotor blades 46b forms the second stage rotor cascade; a plurality of rotor blades 26c forms the third stage rotor cascade, ····, and so on.

Further, a reheat steam inlet 3 is provided so that the reheat steam is supplied to the intermediate-pressure turbine 2 through the inlet 3; in addition, a main steam inlet 5 is provided so that the main steam is supplied to the high-pressure turbine 4 through the inlet 5. The steam flow direction regarding the reheat steam inlet 3 of the intermediate-pressure turbine 2 is directed toward the counter-direction of the steam flow direction regarding the main steam inlet 5 of the high-pressure turbine 4. Further, between the intermediate-pressure turbine 2 and the high-pressure turbine 4, an intermediate-pressure dummy part 6 is provided so as to cancel the thrust force developed in the intermediate-pressure turbine 2, and a high-pressure dummy part 7 is also provided so as to cancel the thrust force developed in the high-pressure turbine 4. Further, a space 8 is provided between the intermediate-pressure dummy part 6 and the high-pressure dummy part 7.

As depicted in Fig. 4, in the steam turbine system 03, a part of the steam between the stator blades 44a of the first stator cascade in the high-pressure turbine 4 and the rotor blades 44b of the first rotor cascade in the high-pressure turbine 4 is bled as the cooling steam to be supplied to the intermediate-pressure chamber 4 via the high-pressure dummy part 7 and the intermediate-pressure dummy part 6, the part of the steam as the cooling steam being depressurized after passing through the stator blades 44a of the first stator cascade; thus, the turbine rotor 28 in the intermediate-pressure turbine 2 is cooled by the cooling steam. Incidentally, in Fig. 4, the arrow line of the black thick line marked with the symbol C shows the flow of the cooling steam; a part of the cooling steam is used for cooling the turbine rotor 28, and another part of the cooling steam merges with the steam discharged from the high-pressure turbine 4 so that the confluence steam is re-heated by a re-heater (not shown) and forms a part of reheat steam.

On the other hand, with the progress of the technology in increasing the combustion gas temperature in the field of gas turbines in recent years, the temperature of the main steam that is supplied to the high-pressure turbine as well as the temperature of the reheat steam that is re-heated by the exhaust heat and supplied to the intermediate-pressure turbine has been increased. Further, in order to increase the cycle efficiency of the combined cycle power generating device, the turbine reaction blading has been recently studied and developed; hence, in comparison with the case where conventional impulse blading is used, the temperature of the reheat steam is inclined to be enhanced. Accordingly, in the conventional technology as depicted in Fig. 4, there may be a difficulty that the turbine rotor 28 in the intermediate-pressure turbine 2 is insufficiently cooled.

Further, in relation to the combined cycle power generating device, Patent Reference 1 discloses another technology by which the turbine rotor in the intermediate-pressure turbine can be cooled; namely, Patent Reference 1 discloses a technology regarding a combined cycle power generating device provided with:
a gas turbine plant including a compressor, a combustor and a gas turbine;
a steam turbine plant including a high-pressure turbine, an intermediate-pressure turbine and a low-pressure turbine; and,
a heat recovery steam generator producing the high-pressure steam driving the high-pressure turbine, the intermediate-pressure steam driving the intermediate-pressure turbine, and the low-pressure steam driving the low-pressure turbine, by use of the exhaust gas discharged from the gas turbine,
wherein
   a part of the intermediate-pressure steam produced by the heat recovery steam generator is used for cooling the transition pieces of the combustor, the temperature of the part of the steam being higher than the saturation temperature regarding the intermediate-pressure drum in the heat recovery steam generator,
   the steam that is heated-up after cooling the transition pieces is recovered and supplied to the intermediate-pressure turbine,
   the blades of the gas turbine are cooled by use of the steam bled from the high-pressure turbine;
   the steam that is heated-up after cooling the blades of the gas turbine is recovered and supplied to a middle location of the re-heater in the heat recovery steam generator.

### [References]

### [Patent References]

Patent Reference 1: JP3500020
Patent Reference 2: EP 0 939 201 which relates to a combined cycle power plant.
Patent Reference 3: US 6 038 851 which relates to an exhaust re-combustion type combined cycle power generation plant.
Patent Reference 4: EP 0 736 669 which relates to a steamed cooled gas turbine.
Patent Reference 6: JP H09 189236 which relates to a combined power generating plant and operation method thereof

Patent Reference 3 discloses the preamble of claim 1.

### SUMMARY OF THE INVENTION

### Subjects to be solved

In the technology disclosed by Patent Reference 1 as described above, a part of the intermediate-pressure steam that is produced by the intermediate-pressure drum in the heat recovery steam generator is used for cooling the transition pieces of the combustor; thereby, the temperature of the steam is higher than the saturation temperature regarding the intermediate-pressure drum in the heat recovery steam generator. Further, according to the technology of Patent Reference 1, after the steam that is produced by the intermediate-pressure drum has cooled the transition pieces of the combustor, the steam (the transition piece cooling steam) can cool the turbine rotor in the intermediate-pressure turbine. However, the transition piece cooling steam is supplied to the intermediate-pressure turbine, after the transition piece cooling steam is mixed with the reheat steam supplied to the intermediate-pressure turbine. In view of the reheat steam, the transition piece cooling steam is mixed with the reheat steam before the reheat steam enters the intermediate-pressure turbine. Accordingly, the transition piece cooling steam cools not only the turbine rotor but also the reheat steam. In this way, there arises a difficulty that the thermal efficiency regarding the whole combined power generating device is reduced.

In view of the difficulties in the conventional technology, the present invention aims at providing a combined cycle power generating device in which the turbine rotor in the intermediate-pressure turbine can be efficiently cooled without deteriorating the thermal efficiency regarding the whole combined power generating device.

### Means to solve the Subjects

In order to achieve the objectives, the present invention discloses a combined cycle power generating device in accordance with claim 1.

According to the above, the cooling steam is supplied to the intermediate- pressure chamber via the cooling steam inlet different from the inlet of the reheat steam; thus, the cooling steam can be supplied to the intermediate- pressure chamber, without cooling the reheat steam.

Further, the temperature of the cooling steam that has cooled the gas turbine is lower than the temperature of the reheat steam; thus, when the cooling steam is supplied to the intermediate- pressure chamber, the turbine rotor in the intermediate-pressure chamber can be efficiently cooled.

Incidentally, the temperature of the steam at the outlet side of the high-pressure chamber is excessively lower than the temperature of the reheat steam; therefore, if the steam at the outlet side of the high-pressure chamber is used as the cooling steam, then the temperature control regarding the intermediate-pressure chamber becomes difficult, because of the great difference between the temperature of the reheat steam and the temperature of the steam at the outlet side of the high-pressure chamber. Hence, it becomes necessary that the temperature of the cooling steam (to be used for cooling the intermediate-pressure chamber) be higher than the temperature of the steam at the outlet side of the high-pressure chamber.

In the combined cycle power generating device, the intermediate-pressure chamber includes, but is not limited to:
an intermediate pressure casing for supporting roots and tips of stator blades of a first stage stator cascade that is placed immediately behind the reheat steam inlet, as well as roots of stator blades of a second stage stator cascade and the following stage stator cascades; and
an intermediate pressure turbine rotor having a plurality of rotor cascades, the intermediate pressure turbine rotor being housed in the intermediate pressure casing,
wherein the cooling steam inlet is configured by a cooling steam recovery pipe (19) which is communicated to a space between the first stage stator cascade and a first stage rotor cascade, via a gap between the intermediate pressure turbine rotor and the intermediate pressure
   casing at a location where the intermediate pressure casing supports the stator blades of the first stage stator cascade.

According to the above, after the reheat steam has passed through the first stage stator cascade and the temperature of the reheat steam is reduced to a level of the temperature of the above-described cooling steam, the reheat steam enters the intermediate-pressure chamber; then, the cooling steam enters the intermediate-pressure chamber. Hence, the reheat steam can be supplied to the intermediate-pressure chamber, without being cooled by the cooling steam. Accordingly, the reheat steam can further efficiently produce mechanical work in the intermediate-pressure chamber.

Another preferable embodiment of the present invention is the combined cycle power generating device, wherein
the pressure of the cooling steam is higher than the pressure of the reheat steam;
a dummy part is provided between the intermediate pressure chamber and the high-pressure chamber so as to partition between the chambers; and,
the cooling steam recovery pipe is communicated with the dummy part.

According to the above, the cooling steam also cools the dummy part. Thus, the cooled area can be enlarged.

Another preferable embodiment of the present invention is the combined cycle power generating device, wherein the cooling steam is a transition piece cooling steam that has cooled a combustor of the gas turbine.

In a conventional way, since the transition piece cooling steam is directly mixed with the reheat steam so as to be treated in the following cycle process, the transition piece cooling steam cools the reheat steam so that the thermal efficiency is reduced. According to the above embodiment, however, the transition piece cooling steam is used as the cooling the steam as described above; thus, it becomes unnecessary to mix the transition piece cooling steam with the reheat steam. Therefore, the deterioration of the thermal efficiency can be prevented, the deterioration being attributable to the temperature drop of the reheat steam mixed with the transition piece cooling steam.

### Effects of the Invention

According to the present invention, a combined cycle power generating device can be realized; thereby, the turbine rotor in the intermediate-pressure turbine can be efficiently cooled without deteriorating the thermal efficiency regarding the whole combined power generating device.

### BRIEF DESCRIPTION OF THE DRAWINGS

Fig. 1 shows the diagram regarding the system outline of the combined cycle power generating device according to a first mode of the present invention;
Fig. 2 explains the cooling regarding the turbine rotor in the intermediate-pressure turbine according to the first mode of the present invention;
Fig. 3 explains the cooling regarding the turbine rotor in the intermediate-pressure turbine according to a second mode of the present invention;
Fig. 4 explains the cooling regarding the turbine rotor in the intermediate-pressure turbine according to a conventional technology.

### DETAILED DESCRIPTION OF THE PREFERRED EMBODIMENTS

Hereafter, the present invention will be described in detail with reference to the modes or embodiments shown in the figures. However, the dimensions, materials, shape, the relative placement and so on of a component described in these modes or embodiments shall not be construed as limiting the scope of the invention thereto, unless especially specific mention is made.

### (First Mode)

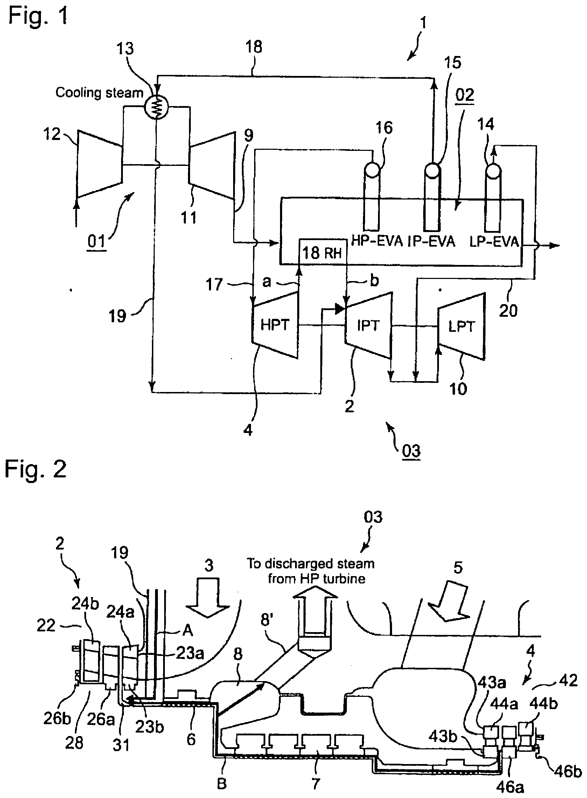

Fig. 1 shows the diagram regarding the system outline of the combined cycle power generating device according to a first mode of the present invention.

The combined cycle power generating device 1 includes a gas turbine (system) 01, a heat recovery steam generator 02, and a steam turbine system 03 that includes a high-pressure turbine 4, an intermediate-pressure turbine and a low-pressure turbine 10.

As shown in Fig. 1, the gas turbine system 01 includes a compressor 12, a combustor 13 and a gas turbine 11; the compressor 12 inhales the atmospheric air and compresses the air to a predetermined pressure level; in the combustor 13, the air compressed by the compressor 12 and fuel are mixed and burnt so that the temperature of the combustion gas reaches a prescribed temperature at the turbine inlet (combustion gas inlet) . After having produced mechanical work in the gas turbine 11, the combustion gas is discharged as the exhaust gas from the gas turbine, and supplied toward the heat recovery steam generator 02 via an exhaust gas duct 9.

Further, the heat recovery steam generator 02 includes a low-pressure drum 14, an intermediate-pressure drum 15 and a high-pressure drum 16; in each drum, superheated steam is generated. The steam generated in the high-pressure drum 16 as the main steam is supplied to the high-pressure turbine 4 through a high-pressure steam pipe 17, and expands so as to produce mechanical work in the high-pressure turbine 4. The steam discharged from the steam outlet of the high-pressure turbine 4 is supplied to a re-heater 18RH so as to be reheated therein: the reheated steam as the reheat steam is supplied to the intermediate-pressure turbine 2.

Further, the steam generated in the intermediate-pressure drum 15 is supplied to the transition pieces of the combustor 13 through a cooling steam pipe 18, and cools the transition pieces; the steam that has cooled the transition pieces of the combustor 13 and is heated-up by the heat exchange to a temperature level higher than the temperature level at the steam outlet the high-pressure turbine 4; and, the heated-up steam is fed to the intermediate-pressure turbine 2 through a cooling steam recovery pipe 19, as described later.

Further, the reheat steam supplied to the intermediate-pressure turbine 2 expands so as to produce mechanical work in the intermediate-pressure turbine 2; then, the steam having produced mechanical work therein is discharged out of the intermediate-pressure turbine 2, and merges with the steam that is generated in the low-pressure drum 14 and fed through a low-pressure steam pipe 20. And, the confluence of the steam is fed to the steam inlet of the low-pressure turbine 10.

The steam supplied to the steam inlet of the low-pressure turbine 10 expands so as to produce mechanical work in the low-pressure turbine 10, the mechanical work being added to the power produced by the generator (not shown) ; the steam having produced mechanical work in the low-pressure turbine 10 is fed to a condenser (not shown) so as to be condensed into water. Further, the condensed water is pressurized to a prescribed pressure by a pressure pump, and fed to the heat recovery steam generator 02 via a feed water pipe.

In the next place, in relation to the combined cycle power generating device 1 as shown in Fig. 1, the cooling regarding the intermediate-pressure turbine 2 is explained. Fig. 2 explains the cooling regarding the turbine rotor in the intermediate-pressure turbine according to the first mode of the present invention; in addition, Fig.2 shows the periphery of the steam inlet of the high-pressure turbine as well as the periphery of the steam inlet of the intermediate-pressure turbine regarding the steam turbine system.

As already described based on Fig. 1, the steam turbine system 03 includes a high-pressure turbine 4, an intermediate-pressure turbine 2 and a low-pressure turbine 10.

The intermediate-pressure turbine 2 includes a plurality of stator cascades. A plurality of stator blades 24a forms the first stage stator cascade; a plurality of stator blades 24b forms the second stage stator cascade; a plurality of stator blades 24c forms the third stage stator cascade, ····, and so on. Hereby, the intermediate-pressure turbine 2 further includes an intermediate- pressure turbine casing 22 that supports the roots 23a and tips 23b of the stator blades 24a regarding the first stage stator cascade; in addition, the intermediate-pressure turbine casing 22 supports the roots 23a of the stator blades 24b, 24c, ···· regarding the second stage stator cascade and the following stage stator cascades. The intermediate-pressure turbine 2 further includes a plurality of rotor cascades. A plurality of rotor blades 26a forms the first stage rotor cascade; a plurality of rotor blades 26b forms the second stage rotor cascade; a plurality of rotor blades 26c forms the third stage rotor cascade, ····, and so on.

On the other hand, the high-pressure turbine 4 includes a plurality of stator cascades. A plurality of stator blades 44a forms the first stage stator cascade; a plurality of stator blades 44b forms the second stage stator cascade; a plurality of stator blades 44c forms the third stage stator cascade, ····, and so on. Hereby, the high-pressure turbine 4 further includes a high-pressure turbine casing 42 that supports the roots 43a and tips 43b of the stator blades 44a regarding the first stage stator cascade; in addition, the high-pressure turbine casing 42 supports the roots 43a of the stator blades 44b, 44c, ···· regarding the second stage stator cascade and the following stage stator cascades. The high-pressure turbine 4 further includes a plurality of rotor cascades. A plurality of rotor blades 46a forms the first stage rotor cascade; a plurality of rotor blades 46b forms the second stage rotor cascade; a plurality of rotor blades 26c forms the third stage rotor cascade, ····, and so on.

Further, a reheat steam inlet 3 is provided so that the reheat steam is supplied to the intermediate-pressure turbine 2 through the inlet 3; in addition, a main steam inlet 5 is provided so that the main steam is supplied to the high-pressure turbine 4 through the inlet 5. The steam flow direction regarding the reheat steam inlet 3 of the intermediate-pressure turbine 2 is directed toward the counter-direction of the steam flow direction regarding the main steam inlet 5 of the high-pressure turbine 4. Further, between the intermediate-pressure turbine 2 and the high- pressure turbine 4, an intermediate-pressure dummy part 6 is provided so as to cancel the thrust force developed in the intermediate-pressure turbine 2, and a high-pressure dummy part 7 is also provided so as to cancel the thrust force developed in the high-pressure turbine 4. Further, a space 8 is provided between the intermediate-pressure dummy part 6 and the high-pressure dummy part 7.

In the steam turbine system 03 as depicted in Fig. 2, a communicating passage 31 is provided so as to communicate a location between the stator blades 44a of the first stator cascade in the high-pressure turbine 4 and the rotor blades 46a of the first rotor cascade in the high-pressure turbine 4 to a location between the stator blades 24a of the first stator cascade in the intermediate-pressure turbine 2 and the rotor blades 26a of the first rotor cascade in the intermediate-pressure turbine 2. In this manner, a part of the steam between the stator blades 44a of the first stator cascade in the high-pressure turbine 4 and the rotor blades 46a of the first rotor cascade in the high-pressure turbine 4 is bled as the cooling steam for cooling the turbine rotor 28 in the intermediate-pressure turbine 2, the part of the steam as the cooling steam being depressurized after passing through the stator blades 44a of the first stator cascade. Hereby, the bled steam is supplied to the location between the stator blades 24a of the first stator cascade in the intermediate-pressure turbine 2 and the rotor blades 26a of the first rotor cascade in the intermediate-pressure turbine 2, via the communicating passage 31, so as to cool the turbine rotor 28 in the intermediate-pressure turbine 2. Incidentally, in Fig. 2, the arrow line of the black thick line marked with the symbol B shows the flow of the cooling steam from the high-pressure turbine 4. Further, a part of the cooling steam is used for cooling the turbine rotor 28 in the intermediate-pressure turbine 2; another part of the cooling steam merges with the steam discharged from the high-pressure turbine 4, via a space 8 and a pipe line (a steam passage) 8' that merges with a steam pipe line depicted with a symbol a in Fig. 1, the passage 8' merging with the steam flow that is discharged out of from the high-pressure turbine 4. And the confluence steam is reheated so as to form a part of the reheat steam.

Further, a specific configuration of the present invention is that the cooling steam (hereafter also called the transition piece cooling steam) that has been heated-up by cooling the transition pieces of the combustor 13 streams through the cooling steam recovery pipe 19, and the cooling steam recovery pipe 19 merges with the communicating passage 31, at the location between the intermediate-pressure dummy part 6 and the intermediate-pressure turbine 2. In this way, the transition piece cooling steam that has cooled the transition pieces of the combustor 13 in the gas turbine 01 is supplied to the location between the stator blades 24a of the first stator cascade and the rotor blades 26a of the first rotator cascade in the intermediate-pressure turbine 2; thus, the transition piece cooling steam cools the turbine rotor 28in the intermediate-pressure turbine 2. Incidentally, in Fig. 2, the arrow line of the black thick line marked with the symbol A shows the flow of the transition piece cooling steam.

According to the first mode of the present invention, in addition to the cooling steam streaming from the high-pressure turbine 4 to the intermediate-pressure turbine 2 as depicted by the steam flow marked with the symbol B in Fig. 2, the transition piece cooling steam cools the turbine rotor 28 in the intermediate-pressure turbine 2 as depicted by the steam flow marked with the symbol A in Fig. 2. The temperature of the transition piece cooling steam is lower than the temperature of the cooling steam streaming through the flow line marked with the symbol B in Fig. 2; accordingly, the cooling effect regarding the turbine rotor 28 in the intermediate-pressure turbine 2 can be enhanced by use of the transition piece cooling steam.

Incidentally, on the other hand, it can be considered that the steam on the outlet side of the high-pressure turbine 4 is made use of so as to cool the turbine rotor 28, in view of the steam process regarding the combined cycle power generating device; thereby, the temperature of the steam on the outlet side of the high-pressure turbine 4 is lower than the temperature of the transition piece cooling steam. However, the temperature of the steam on the outlet side of the high-pressure turbine 4 is excessively lower than the temperature of the transition piece cooling steam and the cooling effect is surplus; hence, when the steam on the outlet side of the high-pressure turbine is used for cooling the turbine rotor 28 and the intermediate-pressure turbine 2, the temperature control becomes difficult. Therefore, it is preferable to use the steam of which the temperature is higher than the temperature of the steam on the outlet side of the high-pressure turbine 4 and lower than the temperature of the steam streaming through the flow line marked with the symbol B in Fig. 2; and, the transition piece cooling steam satisfies this preferable condition, and is optimal as the cooling steam that cools the part in question.

Further, toward the location between the stator blades 24a of the first stator cascade in the intermediate-pressure turbine 2 and the rotor blades 26a of the first rotor cascade in the intermediate-pressure turbine 2, the steam streaming through the flow line marked with the symbol B as well as the transition piece cooling steam is supplied. After both the steam cools the part in question, both the steam (confluence steam) can be fed to the intermediate-pressure turbine 2, via the re-heater, without reducing the temperature of the reheat steam.

In other words, the turbine rotor in the intermediate-pressure turbine can be efficiently cooled, without deteriorating the whole thermal cycle.

### (Second Mode)

Fig. 3 explains the cooling regarding the turbine rotor in the intermediate-pressure turbine according to a second mode of the present invention; Fig. 3 shows the periphery of the steam inlet of the high-pressure turbine as well as the periphery of the steam inlet of the intermediate-pressure turbine regarding the steam turbine in the combined cycle power generating device.

Incidentally, the same components in Fig. 3 as in Fig. 2 are given common numerals or symbols and, explanation repetitions regarding the same components are omitted. Further, in this second mode, the system diagram regarding the whole combined cycle power generating device is the same as that in Fig. 1 of the first mode, except the steam flow lines that appear in the space 8; thus, the drawing and the explanation are omitted on the premise that the explanation is given by the aid of Fig.1.

In Fig. 3, the pipe line 8' is merged with a part b of Fig. 1.

The pressure of the steam in the space 8 is almost the same as the pressure of the steam at the counter-end side of the pipe line 8'. Thus, in Fig. 3, the pressure of the steam in the space 8 is almost the same as the pressure of the steam at the inlet side of the intermediate-pressure turbine 2, the pressure of the steam in the space 8 being lower than the pressure of the transition piece cooling steam.

Hence, as shown by the arrow line marked with the symbol A' in Fig. 3 regarding the second mode, a part of the transition piece cooling steam streams toward the turbine rotor 28 in the intermediate-pressure turbine 2 so as to cool the turbine rotor 28; and, another part of the transition piece cooling steam streams toward the inlet side (the line part b in Fig. 1) of the intermediate-pressure turbine 2, via intermediate-pressure dummy part 6 and the space 8, so as to merge with the reheat steam. Thereby, as shown by the arrow line marked with the symbol B' in Fig. 3, the cooling steam from the high-pressure turbine 4 wholly streams toward the inlet side (the line part b in Fig. 1) of the intermediate- pressure turbine 2, via the space 8 and the pipe line 8', so as to merge with the reheat steam.

According to the above-described second mode of the present invention, in addition to the same effect as by the first mode, the intermediate-pressure dummy part 6 can be also cooled by use of the transition piece cooling steam. Thus, the cooled area can be enlarged.

### Industrial Applicability

The present disclosure can be applicable to the combined cycle power generating device in which the turbine rotor in the intermediate-pressure turbine can be efficiently cooled, without deteriorating the whole thermal cycle.

## Claims

1. A combined cycle power generating device in which exhaust heat of a gas turbine (01) reheats steam which is discharged from a high pressure chamber (4) of a steam turbine (03) so that the reheated steam is supplied to an intermediate-pressure chamber (2), thereby driving the steam turbine (03), the intermediate-pressure chamber (2) comprising:
a cooling steam inlet configured to provide cooling steam that has cooled the gas turbine (01) to the intermediate-pressure chamber, wherein the cooling steam inlet is different from a reheat steam inlet (3) for reheat steam that is reheated by the exhaust heat of the gas turbine (01), the cooling steam is supplied to the intermediate-pressure chamber (2) without mixing the cooling steam with the reheat steam, and the cooling steam is supplied to the intermediate-pressure chamber (2) to cool an intermediate pressure turbine rotor (28) provided in the intermediate-pressure chamber;
**characterized in that** the intermediate pressure chamber comprises:
an intermediate pressure casing (22) for supporting roots (23a) and tips (23b) of stator blades (24a) of a first stage stator cascade that is placed immediately behind the reheat steam inlet (3), as well as roots (23a) of stator blades (24b,24c) of a second stage stator cascade and the following stage stator cascades; and
an intermediate pressure turbine rotor (28) having a plurality of rotor cascades, the intermediate pressure turbine rotor (28) being housed in the intermediate pressure casing (22),
wherein the cooling steam inlet is configured by a cooling steam recovery pipe (19) which is communicated to a space between the first stage stator cascade and a first stage rotor cascade, via a gap between the intermediate pressure turbine rotor (28) and the intermediate pressure casing (22) at a location where the intermediate pressure casing (22) supports the stator blades (24a) of the first stage stator cascade.

2. The combined cycle power generating device according to claim 1, wherein
the pressure of the cooling steam is higher than the pressure of the reheat steam;
a dummy part (6) is provided between the intermediate pressure chamber and the high-pressure chamber so as to partition between the chambers; and,
the cooling steam recovery pipe (19) is communicated with the dummy part (6).

3. The combined cycle power generating device according to claim 1 or 2, wherein the cooling steam is a transition piece cooling steam that has cooled a combustor (13) of the gas turbine (01).

## Patentansprüche

1. Kombizyklusstromerzeugungsvorrichtung, bei der Abwärme einer Gasturbine (01) Dampf, der aus einer Hochdruckkammer (4) einer Dampfturbine (03) ausgegeben wird, erneut erwärmt, derart, dass der erneut erwärmte Dampf einer Zwischendruckkammer (2) zugeführt wird, wodurch die Dampfturbine (03) angetrieben wird, wobei die Zwischendruckkammer (2) Folgendes umfasst:
einen Kühldampfeinlass, der dazu ausgelegt ist, Kühldampf, der die Gasturbine (01) gekühlt hat, der Zwischendruckkammer zuzuleiten, wobei sich der Kühldampfeinlass von einem Wiedererwärmungsdampfeinlass (3) für Wiedererwärmungsdampf, der von der Abwärme der Gasturbine (01) erneut erwärmt wird, unterscheidet, der Kühldampf der Zwischendruckkammer (2) zugeführt wird, ohne dass der Kühldampf mit dem Wiedererwärmungsdampf gemischt wird, und der Kühldampf der Zwischendruckkammer (2) zugeführt wird, um einen Zwischendruckturbinenrotor (28), der in der Zwischendruckkammer bereitgestellt ist, zu kühlen;
**dadurch gekennzeichnet, dass** die Zwischendruckkammer Folgendes umfasst:
ein Zwischendruckgehäuse (22) zum Stützen von Füßen (23a) und Spitzen (23b) von Statorschaufeln (24a) eines Statorgitters der ersten Stufe, das unmittelbar hinter dem Wiedererwärmungsdampfeinlass (3) platziert ist, sowie von Füßen (23a) von Statorschaufeln (24b, 24c) eines Statorgitters der zweiten Stufe und der Statorgitter folgender Stufen; und
einen Zwischendruckturbinenrotor (28) mit einer Vielzahl von Rotorgittern, wobei der Zwischendruckturbinenrotor (28) im Zwischendruckgehäuse (22) untergebracht ist,
wobei der Kühldampfeinlass durch ein Kühldampfrückgewinnungsrohr (19) ausgelegt ist, das via einen Spalt zwischen dem Zwischendruckturbinenrotor (28) und dem Zwischendruckgehäuse (22) an einer Stelle, an der das Zwischendruckgehäuse (22) die Statorschaufeln (24a) des Statorgitters der ersten Stufe stürzt, mit einem Raum zwischen dem Statorgitter der ersten Stufe und einem Rotorgitter der ersten Stufe kommuniziert.

2. Kombizyklusstromerzeugungsvorrichtung nach Anspruch 1, wobei
der Druck des Kühldampfs höher ist als der Druck des Wiedererwärmungsdampfs;
ein Dummyteil (6) zwischen der Zwischendruckkammer und der Hochdruckkammer vorgesehen ist, um zwischen den Kammern zu partitionieren; und
das Kühldampfrückgewinnungsrohr (19) mit dem Dummyteil (6) kommuniziert.

3. Kombizyklusstromerzeugungsvorrichtung nach Anspruch 1 oder 2, wobei der Kühldampf ein Übergangsstückkühldampf ist, der eine Brennkammer (13) der Gasturbine (01) gekühlt hat.

## Revendications

1. Dispositif de génération d'énergie à cycle combiné dans lequel la chaleur d'échappement d'une turbine à gaz (01) réchauffe la vapeur qui est déchargée par une chambre à haute pression (4) d'une turbine à vapeur (03), de sorte que la vapeur réchauffée est amenée à une chambre à pression intermédiaire (2), entraînant ainsi la turbine à vapeur (03), la chambre à pression intermédiaire (2) comprenant :
une entrée de vapeur de refroidissement configurée pour fournir la vapeur de refroidissement qui a refroidi la turbine à gaz (01), à la chambre à pression intermédiaire, dans lequel l'entrée de vapeur de refroidissement est différente d'une entrée de vapeur de réchauffage (3) pour réchauffer la vapeur qui est réchauffée par la chaleur d'échappement de la turbine à gaz (01), la vapeur de refroidissement est amenée à la chambre à pression intermédiaire (2) sans mélanger la vapeur de refroidissement avec la vapeur de réchauffage, et la vapeur de refroidissement est amenée à la chambre à pression intermédiaire (2) afin de refroidir un rotor de turbine à pression intermédiaire (28) prévu dans la chambre à pression intermédiaire ;
**caractérisé en ce que** la chambre à pression intermédiaire comprend :
un carter de pression intermédiaire (22) pour supporter les pieds (23a) et les sommets (23b) des aubes de stator (24a) d'une cascade de stators de premier étage qui est placée immédiatement derrière l'entrée de vapeur de réchauffage (3), ainsi que les pieds (23a) des aubes de stator (24b, 24c) d'une cascade de stators de second étage et les cascades de stators d'étage suivant ; et
un rotor de turbine à pression intermédiaire (28) ayant une pluralité de cascades de rotors, le rotor de turbine à pression intermédiaire (28) étant logé dans le carter de pression intermédiaire (22),
dans lequel l'entrée de vapeur de refroidissement est configurée par un tuyau de récupération de vapeur de refroidissement (19) qui est en communication avec un espace entre la cascade de stators de premier étage et une cascade de rotors de premier étage, via un espace entre le rotor de turbine à pression intermédiaire (28) et le carter de pression intermédiaire (22) à un emplacement où le carter de pression intermédiaire (22) supporte les aubes de stator (24a) de la cascade de stators de premier étage.

2. Dispositif de génération d'énergie à cycle combiné selon la revendication 1, dans lequel :
la pression de la vapeur de refroidissement est supérieure à la pression de la vapeur de réchauffage ;
une partie factice (6) est prévue entre la chambre à pression intermédiaire et la chambre à haute pression afin de réaliser une séparation entre les chambres ; et
le tuyau de récupération de vapeur de refroidissement (19) communique avec la partie factice (6).

3. Dispositif de génération d'énergie à cycle combiné selon la revendication 1 ou 2, dans lequel la vapeur de refroidissement est une vapeur de refroidissement de pièce de transition qui a refroidi une chambre de combustion (13) de la turbine à gaz (01).
